# EUROPEAN PATENT APPLICATION

(11) **EP 4 269 495 A1**
(43) Date of publication of application: **01.11.2023**
(21) Application number: 23742174.8
(22) Date of filing: 05.01.2023
(51) Int. Cl.: C08K 7/14, C08K 5/524, C08K 5/00, C08K 5/3492, C08K 5/5353, C08K 3/16, C08K 3/34, C08K 3/36, C08L 77/06

(54) **THERMOPLASTIC RESIN COMPOSITION, METHOD FOR PRODUCING SAME, AND MOLDED ARTICLE MANUFACTURED THEREFROM**

(30) Priority: 26.01.2022 KR 20220011269; 04.01.2023 KR 20230001114
(71) Applicant: LG Chem, Ltd., Seoul 07336 (KR)
(72) Inventor: KIM, Han Sol, Daejeon 34122 (KR); SEO, In Seok, Daejeon 34122 (KR); PARK, Jae Chan, Daejeon 34122 (KR)
(74) Representative: Goddar, Heinz J.
(86) International application number: PCT/KR2023/000186
(87) International publication number: WO 2023/146152

(57) **Abstract**

The present invention relates to a thermoplastic resin composition, a method of preparing the same, and a molded article including the same. More particularly, the present invention relates to a thermoplastic resin composition including 35 to 65 % by weight of a polyamide resin (A); 18 to 40 % by weight of glass fiber (B); 10 to 30 % by weight of a composite flame retardant (C); 0.06 to 0.4 % by weight of a phosphite-based thermal stabilizer (D); and 0.1 to 0.7 % by weight of a copper-based composite thermal stabilizer (E), a method of preparing the thermoplastic resin composition, and a molded article including the thermoplastic resin composition.

According to the present invention, the present invention has an effect of providing a thermoplastic resin composition capable of implementing high flame retardancy by including a non-halogen phosphorus-based flame retardant and having excellent mechanical and electrical properties even after moisture absorption, a method of preparing the thermoplastic resin composition, and a molded article including the thermoplastic resin composition.

## Description

### [Technical Field]

### [Cross-Reference to Related Applications]

This application claims priority to Korean Patent Application No. 10-2022-0011269, filed on January 26, 2022, and Korean Patent Application No. 10-2023-0001114, re-filed on January 4, 2023, based on the priority of the above patent, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition capable of implementing high flame retardancy by including a non-halogen phosphorus-based flame retardant and having excellent mechanical and electrical properties even after moisture absorption, a method of preparing the thermoplastic resin composition, and a molded article including the thermoplastic resin composition.

### [Background Art]

As an engineering plastic, a polyamide resin is a crystalline and thermoplastic material. Polyamide resins have excellent mechanical strength, wear resistance, heat resistance, chemical resistance, electrical insulating properties, and arc resistance, and thus are widely used in various fields such as automotive parts, electric and electronic parts, and industrial materials. However, since a polyamide resin has a high moisture absorption rate due to amide bonds present in the molecule thereof, the mechanical and electrical properties thereof may be severely deteriorated by absorbed moisture, limiting the application range thereof.

In addition, since a polyamide resin has low flame retardancy, a flame retardant is added when producing products requiring flame retardancy using the polyamide resin.

Recently, in accordance with REACH and RoHS regulations in Europe, research on replacing bromine-based flame retardants used in polyamide resin compositions with non-halogen flame retardants has been actively conducted.

In the case of a phosphorus-based flame retardant among non-halogen flame retardants, when the phosphorus-based flame retardant is used in the same amount as in a conventional bromine-based flame retardant, a glow wire flammability index (GWFI) of about 960 °C and a comparative tracking index (CTI) of about 600 V may be achieved. That is, excellent flame retardancy may be implemented. However, the phosphorus-based flame retardant is more expensive than the bromine-based flame retardant, and thus the use of the phosphorus-based flame retardant increases production cost.

As another non-halogen flame retardant, nitrogen-based flame retardants implement flame retardancy in a different way from bromine-based flame retardants and phosphorus-based flame retardants. Bromine-based flame retardants and phosphorus-based flame retardants realize flame retardancy by blocking the inflow of oxygen and heat by forming char outside a polymer when ignited by a heat source. On the other hand, nitrogen-based flame retardants realize flame retardancy by inducing material exhaustion by disintegrating a polymer when energy is supplied by a heat source.

Generally, a nitrogen-based flame retardant is not used in combination with an inorganic filler such as glass fiber. The reason is that the glass fiber acts as a support inside a polymer and prevents the polymer from collapsing, thereby preventing exhaustion of a material. As a result, when an inorganic filler and a nitrogen-based flame retardant are used in combination, GWFI is below 600 °C and CTI is below 500 V, resulting in poor electrical characteristics and flame retardancy.

In addition, a copper-based composite thermal stabilizer is used to improve electrical characteristics. However, in this case, electrical characteristics may deteriorate after moisture absorption.

Therefore, there is a need to develop a thermoplastic resin composition capable of implementing high flame retardancy by including a non-halogen flame retardant, having excellent mechanical and electrical properties even after moisture absorption, and thus being usable under humid conditions.

### [Related Art Documents]

### [Patent Documents]

KR 2014-0086795 A

### [Disclosure]

### [Technical Problem]

Therefore, the present invention has been made in view of the above problems, and it is one object of the present invention to provide a thermoplastic resin composition capable of implementing high flame retardancy by including a non-halogen phosphorus-based flame retardant and having excellent mechanical and electrical properties even after moisture absorption.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

### [Technical Solution]

In accordance with one aspect of the present invention, provided is a thermoplastic resin composition including 35 to 65 % by weight of a polyamide resin (A); 18 to 40 % by weight of glass fiber (B); 10 to 30 % by weight of a composite flame retardant (C); 0.06 to 0.4 % by weight of a phosphite-based thermal stabilizer (D); and 0.1 to 0.7 % by weight of a copper-based composite thermal stabilizer (E).

Preferably, the thermoplastic resin composition may have a comparative tracking index (CTI) of 530 V or more as measured using a specimen having a thickness of 3 mm according to IEC 60112 after being immersed in a water bath at 70 °C for 7 days.

Preferably, the thermoplastic resin composition may include 0.01 to 0.6 % by weight of a nucleating agent (F) based on a total weight thereof.

Preferably, the nucleating agent (F) may include one or more organic nucleating agents selected from the group consisting of phosphoric acid, phosphorous acid, hypophosphorous acid, and salts or esters thereof; one or more inorganic nucleating agents selected from the group consisting of talc, mica, wollastonite, silica, kaolin, and clay; or a mixture thereof.

Preferably, the polyamide resin (A) may include one or more selected from the group consisting of a polymer of a diamine having 2 to 30 carbon atoms and a dicarboxylic acid having 4 to 30 carbon atoms; a lactam polymer; an aminocarboxylic acid polymer; and a copolymer of a lactam and an aminocarboxylic acid.

Preferably, the glass fiber (B) may have an average diameter of 3 to 25 µm and an average length of 1 to 10 mm.

Preferably, the composite flame retardant (C) may include an organic phosphinate metal salt (c-1) and a melamine phosphate-based flame retardant (c-2).

Preferably, the organic phosphinate metal salt (c-1) may be a compound represented by Chemical Formula 1 below:

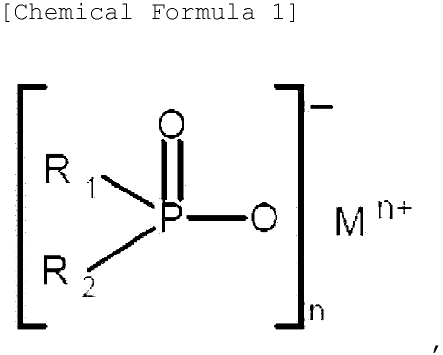

wherein R₁ and R₂ are each an alkyl group or aryl group having 1 to 6 carbon atoms, M includes one or more selected from the group consisting of Mg, Ca, Al, Sb, Sn, Ge, Ti, Fe, Zr, Ce, Bi, Sr, Mn, Li, Na, K, and a protonated nitrogen base, and n is an integer from 1 to 4.

Preferably, the melamine phosphate-based flame retardant (c-2) may include one or more selected from the group consisting of melamine pyrophosphate, melamine polyphosphate, melamine pyrophosphate metal salt, and cyclic benzyl phosphate.

Preferably, the phosphite-based thermal stabilizer (D) may include one or more selected from the group consisting of triphenyl phosphite, diphenylisodecyl phosphite, phenyl diisodecyl phosphite, 4,4'-butylidene-bis(3-methyl-6-t-butylphenyl-di-tridecyl) phosphite, cyclic neopentanetetrayl-bis(octadecyl)phosphite, tris(nonylphenyl)phosphite, tris(dinonyl)phosphite, dioctadecyl-3,5-di-t-butyl-4-hydroxybenzylphosphonate, and di-n-octadecyl-1-(3,5-di-t-butyl-4-hydroxy-phenyl)-ethanephosphonate.

Preferably, the phosphite-based thermal stabilizer (D) may contain 8 to 13 % by weight of phosphorus based on a total weight thereof.

Preferably, the copper-based composite thermal stabilizer (E) may include one or more selected from the group consisting of copper(I) chloride, copper(I) bromide, copper(I) iodide, copper(II) chloride, copper(II) bromide, and copper(II) iodide.

Preferably, the copper-based composite thermal stabilizer (E) may include an alkali metal halide.

In accordance with another aspect of the present invention, provided is a method of preparing a thermoplastic resin composition, the method including kneading and extruding 35 to 65 % by weight of a polyamide resin (A), 18 to 40 % by weight of glass fiber (B), 10 to 30 % by weight of a composite flame retardant (C), 0.06 to 0.4 % by weight of a phosphite-based thermal stabilizer (D), and 0.1 to 0.7 % by weight of a copper-based composite thermal stabilizer (E) at 220 to 280 °C and 100 to 400 rpm to obtain pellets.

In accordance with yet another aspect of the present invention, provided is a molded article including the thermoplastic resin composition.

### [Advantageous Effects]

According to the present invention, the present invention has an effect of providing a thermoplastic resin composition capable of implementing high flame retardancy by including a non-halogen phosphorus-based flame retardant, having excellent mechanical and electrical properties even after moisture absorption by combination of a phosphite-based thermal stabilizer (D) and a copper-based composite thermal stabilizer (E), and thus being applicable to automotive parts and electric and electronic parts, a method of preparing the thermoplastic resin composition, and a molded article including the thermoplastic resin composition.

In particular, since the mechanical and electrical properties of the thermoplastic resin composition of the present invention can be maintained under humid conditions, the thermoplastic resin composition is applicable to connectors, circuit breakers, and the like.

### [Best Mode]

Hereinafter, a thermoplastic resin composition of the present invention, a method of preparing the same, and a molded article including the same will be described in detail.

The present inventors confirmed that, when a polyamide resin, glass fiber, a composite flame retardant, a phosphite-based thermal stabilizer, and a copper-based composite thermal stabilizer were included in a predetermined content ratio, high flame retardancy and excellent appearance were realized by including a non-halogen phosphorus-based flame retardant, and mechanical and electrical properties after moisture absorption were similar to those before moisture absorption. Based on these results, the present inventors conducted further studies to complete the present invention.

The thermoplastic resin composition of the present invention is described in detail as follows.

The thermoplastic resin composition of the present invention includes 35 to 65 % by weight of a polyamide resin (A); 18 to 40 % by weight of glass fiber (B); 10 to 30 % by weight of a composite flame retardant (C); 0.06 to 0.4 % by weight of a phosphite-based thermal stabilizer (D); and 0.1 to 0.7 % by weight of a copper-based composite thermal stabilizer (E). In this case, high flame retardancy may be implemented by including the non-halogen phosphorus-based flame retardant, and mechanical and electrical properties may be excellent even after moisture absorption.

Hereinafter, each of the components of the thermoplastic resin composition according to the present invention will be described in detail.

### (A) Polyamide resin

For example, based on a total weight of components (A) to (E), the polyamide resin (A) may be included in an amount of 35 to 65 % by weight, preferably 40 to 60 % by weight, more preferably 45 to 55 % by weight, still more preferably 45 to 51 % by weight. Within this range, physical property balance between mechanical strength and extrusion processability and appearance may be excellent.

The polyamide resin (A) may be a polyamide prepared by condensation polymerization of a lactam or a ω-amino acid alone or two or more ω-amino acids, or a polyamide prepared by condensation polymerization of a diacid and a diamine, but the present invention is not limited thereto.

Preferably, the polyamide resin (A) may include one or more selected from the group consisting of a polymer of a diamine having 2 to 30 carbon atoms and a dicarboxylic acid having 4 to 30 carbon atoms; a lactam polymer; an aminocarboxylic acid polymer; and a copolymer of a lactam and an aminocarboxylic acid. In this case, mechanical properties and appearance may be excellent.

In addition, for example, the polyamide resin (A) may be a homopolyamide, a copolyimide, or a mixture thereof.

For example, the polyamide resin (A) may be crystalline, semi-crystalline, or amorphous.

The polymer of a diamine having 2 to 30 carbon atoms and a dicarboxylic acid having 4 to 30 carbon atoms may include preferably one or more polymers selected from the group consisting of polyamides obtained by polymerizing an aliphatic or aromatic diamine, such as ethylenediamine, tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonahexamethylenediamine, metaxylenediamine, paraxylenediamine, 1,3-bisaminomethylcyclohexane, 1,4-bisaminomethylcyclohexane, 1-amino-3-aminomethyl-3,5,5-trimethylcyclohexane, bis(4-aminocyclohexane)methane, bis(4-methyl-4-aminocyclohexyl)methane, 2,2-bis(4-aminocyclohexyl)propane, bis(aminopropyl)piperazine, and aminoethylpiperidine, and an aliphatic or aromatic dicarboxylic acid, such as adipic acid, sebacic acid, azelaic acid, terephthalic acid, 2-chloroterephthalic acid, and 2-methylterephthalic acid.

The lactam polymer may be preferably obtained by ring-opening polymerization of lactam compounds such as caprolactam and laurolactam.

The aminocarboxylic acid polymer may be preferably obtained by polymerizing aminocarboxylic acids such as aminocaproic acid, 11-aminoundecanoic acid, and 12-aminododecanoic acid.

The polyamide resin may include preferably one or more selected from the group consisting of polyamide 6, polyamide 66, polyamide 46, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I, and polyamide 66/12/6I.

More preferably, the polyamide resin (A) may be polyamide 6. In this case, advantageous advantages in terms of cost and processability may be obtained, and mechanical properties and heat resistance may be improved.

For example, the polyamide resin (A) may have a relative viscosity (RV) of 2 to 3, preferably 2.1 to 2.7, more preferably 2.2 to 2.5. In this case, during extrusion molding, overheating due to friction between the screw of an extruder and a molten composition may be prevented. In addition, extrusion processability may be excellent because tension applied to the molten composition is appropriate.

In the present disclosure, unless otherwise specified, relative viscosity is measured at 20 °C using a UFIT-UVS instrument using a solution prepared by dissolving 1 g of a polyamide in 100 ml of 96 wt% sulfuric acid.

For example, the polyamide resin (A) may have a number average molecular weight of 10,000 to 500,000 g/mol, preferably 10,000 to 300,000 g/mol, more preferably 10,000 to 180,000 g/mol, still more preferably 10,000 to 100,000 g/mol. Within this range, physical property balance and moldability may be excellent.

In the present disclosure, unless otherwise specified, number average molecular weight may be measured at 40 °C by gel permeation chromatography. Specifically, 10 mg of a resin is dissolved in 10 g of hexafluoroisopropanol, and the number average molecular weight thereof is measured. At this time, polymethyl methacrylate (PMMA) is used as a standard material. As a specific measurement example, number average molecular weight may be measured under conditions of solvent: hexafluoroisopropanol, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw, and PDI): OECD TG 118.

A preparation method commonly used in the art may be used as a method of preparing the polyamide resin (A) without particular limitation, and commercially available products may also be used.

### (B) Glass fiber

The glass fiber (B) is included for the purpose of reinforcing the mechanical properties of the composition at low cost. For example, based on a total weight of components (A) to (E), the glass fiber (B) may be included in an amount of 18 to 40 % by weight, preferably 22 to 38 % by weight, more preferably 27 to 33 % by weight. Within this range, mechanical properties may be improved without deteriorating processability, and a final product having an aesthetically pleasing appearance may be produced.

For example, the glass fiber (B) may have an average diameter of 3 to 25 µm, preferably 5 to 20 pm, more preferably 7 to 15 µm. Within this range, mechanical strength may be improved, and the appearance of a final product may be excellent.

For example, the glass fiber (B) may have an average length of 1 to 10 mm, preferably 1 to 7 mm, more preferably 2 to 5 mm. Within this range, mechanical strength may be improved, and the appearance of a final product may be excellent.

For example, the glass fiber (B) may have an aspect ratio (L/D) of average length (L) to average diameter (D) of 100 to 550, preferably 150 to 500, more preferably 200 to 400. Within this range, due to excellent compatibility with resins, surface appearance may be excellent.

In the present disclosure, the diameters and lengths of 30 glass fiber strands are measured using a microscope, and the average value thereof is calculated.

For example, the glass fiber (B) may be chopped glass fiber.

In the present disclosure, chopped glass fiber commonly used in the art may be used as the glass fiber without particular limitation.

For example, the glass fiber (B) may be surface-treated with one or more surface treatment agents selected from the group consisting of amino silane-based compounds, epoxy silane-based compounds, and urethanes. In this case, due to improved compatibility, the glass fiber may be uniformly dispersed in the composition, further enhancing the mechanical strength of the composition.

For example, based on 100 % by weight (glass fiber + surface treatment agent) in total of the surface-treated glass fiber, the surface treatment agent may be included in an amount of 0.1 to 10 % by weight, preferably 0.1 to 5 % by weight, more preferably 0.1 to 0.8 % by weight, still more preferably 0.2 to 0.5 % by weight. Within this range, mechanical properties, wear resistance, and physical property balance may be excellent.

Amino silanes commonly used as a coating agent for glass fiber may be used as the amino silane-based compound without particular limitation. For example, the amino silane-based compound may include one or more selected from the group consisting of γ-glycidoxypropyl triethoxy silane, γ-glycidoxypropyl trimethoxy silane, γ-glycidoxypropyl methyldiethoxy silane, γ-glycidoxypropyl triethoxy silane, 3-mercaptopropyl trimethoxy silane, vinyltrimethoxy silane, vinyltriethoxy silane, γ-methacryloxypropyl trimethoxy silane, γ-methacryloxy propyl triethoxy silane, γ-aminopropyl trimethoxy silane, γ-aminopropyl triethoxy silane, 3-isocyanate propyltriethoxy silane, γ-acetoacetatepropyl trimethoxysilane, γ-acetoacetatepropyl triethoxy silane, γ-cyanoacetyl trimethoxy silane, γ-cyanoacetyl triethoxy silane, and acetoxyaceto trimethoxy silane. In this case, mechanical properties and thermal properties may be excellent, and an injection-molded product having excellent surface properties may be obtained.

Epoxy silanes commonly used as a coating agent for glass fiber may be used as the epoxy silane-based compound without particular limitation. For example, the epoxy silane-based compound may include one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties and heat resistance may be excellent, and an injection-molded product having excellent surface properties may be obtained.

The glass fiber (B) may be appropriately selected within the range commonly used in the art as long as the glass fiber follows the definition of the present invention, and the cross-section thereof may be cylindrical or elliptical. However, the present invention is not limited thereto.

### (C) Composite flame retardant

For example, based on a total weight of components (A) to (E), the composite flame retardant (C) may be included in an amount of 10 to 30 % by weight, preferably 15 to 25 % by weight, more preferably 17 to 23 % by weight. Within this range, high flame retardancy may be achieved with a small content, and mechanical properties may be excellent.

For example, the composite flame retardant (C) may include an organic phosphinate metal salt (c-1) and a melamine phosphate-based flame retardant (c-2). In this case, high flame retardancy may be achieved with a small content within the above-described range, and mechanical properties may be excellent.

For example, the weight ratio (c-1:c-2) of the organic phosphinate metal salt (c-1) to the melamine phosphate-based flame retardant (c-2) may be 60:40 to 90:10, preferably 65:35 to 85:15, more preferably 70:30 to 80:20. Within this range, the balance between flame retardancy and physical properties may be excellent.

For example, the organic phosphinate metal salt (c-1) may be a compound represented by Chemical Formula 1 below. In this case, excellent flame retardancy may be provided, and physical property balance may be excellent.

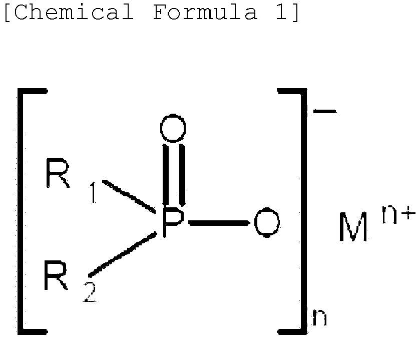

In Chemical Formula 1, R₁ and R₂ are each an alkyl group or aryl group having 1 to 6 carbon atoms, M includes one or more selected from the group consisting of Mg, Ca, Al, Sb, Sn, Ge, Ti, Fe, Zr, Ce, Bi, Sr, Mn, Li, Na, K, and a protonated nitrogen base, and n is an integer from 1 to 4.

The organic phosphinate metal salt (c-1) may include preferably one or more selected from the group consisting of aluminum phosphinate, calcium phosphinate, and zinc phosphinate, more preferably aluminum ethylmethylphosphinate, aluminum diethylphosphinate, or a mixture thereof, still more preferably aluminum diethylphosphinate. In this case, the balance between flame retardancy and physical properties may be excellent.

For example, the melamine phosphate-based flame retardant (c-2) may include one or more selected from the group consisting of melamine pyrophosphate, melamine polyphosphate, melamine pyrophosphate metal salt, and cyclic benzyl phosphate, preferably melamine polyphosphate. In this case, flame retardancy may be increased, and flame dripping may be improved.

Since the composite flame retardant (C) includes the organic phosphinate metal salt (c-1) and the melamine phosphate-based flame retardant (c-2), flame retardancy may be achieved as a synergistic effect, and mechanical properties may be excellent.

### (D) Phosphite-based thermal stabilizer

For example, based on a total weight of components (A) to (E), the phosphite-based thermal stabilizer (D) may be included in an amount of 0.06 to 0.4 % by weight, preferably 0.1 to 0.3 % by weight, more preferably 0.1 to 0.25 % by weight. Within this range, mechanical and electrical properties may be excellent even after moisture absorption. When the phosphite-based thermal stabilizer (D) is included in an amount exceeding the range, the phosphite-based thermal stabilizer (D) may act as impurities in the thermoplastic resin composition, resulting in deterioration of the mechanical properties thereof.

For example, the phosphite-based thermal stabilizer (D) may include one or more selected from the group consisting of triphenyl phosphite, diphenylisodecyl phosphite, phenyl diisodecyl phosphite, 4,4'-butylidene-bis(3-methyl-6-t-butylphenyl-di-tridecyl) phosphite, cyclic neopentanetetrayl-bis(octadecyl)phosphite, tris(nonylphenyl)phosphite, tris(dinonyl)phosphite, dioctadecyl-3,5-di-t-butyl-4-hydroxybenzylphosphonate, and di-n-octadecyl-1-(3,5-di-t-butyl-4-hydroxy-phenyl)-ethanephosphonate, preferably triphenyl phosphite. In this case, by combination with a copper-based composite thermal stabilizer (E) to be described later, electrical performance may be improved before and after moisture absorption.

For example, based on a total weight thereof, the phosphite-based thermal stabilizer (D) may be included in an amount of 5 to 15 % by weight, more preferably 7 to 13 % by weight. In this case, flame retardancy and impact resistance may be excellent.

In the present disclosure, a phosphorus content means the wt% of phosphorus converted from the molecular weight of phosphorus contained in the molecule of the phosphite-based thermal stabilizer.

More preferably, the phosphite-based thermal stabilizer (D) is triphenyl phosphate having a phosphorus content of 5 to 15 % by weight based on a total weight thereof. In this case, by combination with the copper-based composite thermal stabilizer (E) to be described later, electrical performance may be improved before and after moisture absorption.

### (E) Copper-based composite thermal stabilizer

For example, based on a total weight of components (A) to (E), the copper-based composite thermal stabilizer (E) may be included in an amount of 0.1 to 0.7 % by weight, preferably 0.2 to 0.6 % by weight, more preferably 0.2 to 0.5 % by weight. Within this range, by combination with the phosphite-based thermal stabilizer (D), mechanical and electrical properties may be excellent before and after moisture absorption. When the copper-based composite thermal stabilizer (E) is included in an amount exceeding the range, the copper-based composite thermal stabilizer (E) may act as impurities in the thermoplastic resin composition, resulting in deterioration of the mechanical properties thereof. Compared to a case in which the copper-based composite thermal stabilizer (E) is used alone, when the copper-based composite thermal stabilizer (E) is used in combination with the phosphite-based thermal stabilizer (D), electrical characteristics may be further improved.

For example, the copper-based composite thermal stabilizer (E) may include one or more selected from the group consisting of copper(I) chloride, copper(I) bromide, copper(I) iodide, copper(II) chloride, copper(II) bromide, and copper(II) iodide, preferably copper(I) iodide. In this case, deterioration of mechanical and electrical properties after moisture absorption may be prevented.

Preferably, the copper-based composite thermal stabilizer (E) may be used in combination with an alkali metal halide. In this case, mechanical and electrical properties may be excellent even after moisture absorption.

For example, the alkali metal halide may include one or more selected from the group consisting of lithium chloride, lithium bromide, lithium iodide, sodium fluoride, sodium chloride, sodium bromide, sodium iodide, potassium fluoride, potassium chloride, potassium bromide, and potassium iodide, preferably one or more selected from the group consisting of potassium bromide and potassium iodide. In this case, mechanical and electrical properties may be excellent even after moisture absorption.

For example, based on a total weight thereof, the copper-based composite thermal stabilizer (E) may contain 50 to 150 ppm, preferably 80 to 130 ppm, more preferably 90 to 120 ppm of copper. Within this range, deterioration of mechanical and electrical properties after moisture absorption may be prevented.

In the present disclosure, a copper content in the copper-based composite thermal stabilizer may be measured under the condition of wavelength dispersive X-ray fluorescence (WDXRF) or energy X-ray fluorescence (EDXRF) using an X-ray fluorescence spectrometer.

According to the present invention, due to the dipole-dipole interaction between the chain structure of the polyamide resin and moisture by combination of the phosphite-based thermal stabilizer (D) and the copper-based composite thermal stabilizer (E), or as being present in a ligand structure, water-soluble copper salts are converted into insoluble copper compounds. Thus, when exposed to a humid environment, a synergistic effect of minimizing degradation of electrical characteristics caused by releasing the water-soluble copper salts to the surface of a material may be achieved.

### Additives

### (F) Nucleating agent

For example, the thermoplastic resin composition may include a nucleating agent (F).

For example, based on a total weight of components (A) to (F), the nucleating agent (F) may be included in an amount of 0.01 to 0.6 % by weight, preferably 0.05 to 0.5 % by weight, more preferably 0.1 to 0.3 % by weight. Within this range, bonding force between the polyamide resin and the glass fiber may be increased, and the crystallinity of the polyamide resin may be increased. Thus, mechanical and electrical properties may be improved after moisture absorption, and surface appearance may be excellent. When the nucleating agent (F) is included in an amount exceeding the range, the nucleating agent (F) may act as impurities in the thermoplastic resin composition, resulting in deterioration of the mechanical properties thereof.

For example, the nucleating agent (F) may include one or more organic nucleating agents selected from the group consisting of phosphoric acid, phosphorous acid, hypophosphorous acid, and salts or esters thereof; one or more inorganic nucleating agents selected from the group consisting of talc, mica, wollastonite, silica, kaolin, and clay; or a mixture thereof. In this case, mechanical and electrical properties may be further improved.

The nucleating agent (F) is preferably an organic nucleating agent. In this case, surface appearance may be excellent.

The organic nucleating agent may include preferably one or more selected from the group consisting of sodium phosphate, sodium phosphite, sodium hypophosphite, and potassium phosphite, more preferably sodium phosphate. In this case, the bonding force between the polyamide resin and the glass fiber may be increased, and the crystallinity of the polyamide resin may be increased. Thus, deterioration of mechanical and electrical properties due to moisture absorption may be prevented, and surface appearance may be excellent.

Preferably, the amount of the nucleating agent (F) is equal to or less than the amount of the copper-based composite thermal stabilizer (E). In this case, before and after impregnation, mechanical and electrical properties may be excellent.

### (G) Lubricant

For example, the thermoplastic resin composition may include a lubricant (G).

For example, based on a total weight of components (A) to (E) and component (G), the lubricant (G) may be included in an amount of 0.01 to 1 % by weight, preferably 0.05 to 0.7 % by weight, more preferably 0.1 to 0.6 % by weight. Within this range, by increasing compatibility with the polyamide resin, surface defects may be reduced, and excellent mechanical properties may be obtained.

For example, the lubricant (G) may include one or more selected from the group consisting of a fatty acid amide-based compound, montan-based wax, and olefin-based wax, preferably one or more selected from the group consisting of a fatty acid amide-based compound and montan-based wax. In this case, by increasing compatibility with the polyamide resin, surface defects may be reduced.

For example, the fatty acid amide-based compound may include one or more selected from the group consisting of stearamide, behenamide, ethylene bis(stearamide), N,N'-ethylene bis(12-hydroxy stearamide), erucamide, oleamide, and ethylene bis oleamide.

For example, the montan-based wax may be montan wax, montan ester wax, or a mixture thereof.

For example, the montan ester wax may include one or more selected from wax esterified with ethylene glycol and montanic acid, wax esterified with glycerin and montanic acid, calcium montanate containing montanic acid ester, and ester-mixed wax based on montanic acid.

For example, the olefin-based wax may be polyethylene wax, polypropylene wax, or a mixture thereof.

For example, based on 100 parts by weight in total of components (A) to (E), the thermoplastic resin composition may further include 0.01 to 5 parts by weight, preferably 0.05 to 3 parts by weight, more preferably 0.1 to 2 parts by weight, still more preferably 0.2 to 1.5 parts by weight of each of one or more selected from the group consisting of an antioxidant, a UV absorber, a thermal stabilizer, an antistatic agent, an anti-drip agent, an antibacterial agent, a processing aid, an anti-friction agent, an anti-wear agent, a metal deactivator, a coupling agent, a pigment, and a dye. Within this range, required physical properties may be implemented without degrading the intrinsic physical properties of the thermoplastic resin composition of the present invention.

### Thermoplastic resin composition

The thermoplastic resin composition may have a comparative tracking index (CTI) of preferably 530 V or more, more preferably 550 V or more, still more preferably 550 to 750 V as measured using a specimen having a thickness of 3 mm according to IEC 60112 after being immersed in a water bath at 70 °C for 7 days, i.e., after moisture absorption. Within this range, the thermoplastic resin composition may be applied to automotive parts and electric and electronic parts having excellent physical property balance used in humid environments.

The thermoplastic resin composition may have a comparative tracking index (CTI) of preferably 550 V or more, more preferably 600 V or more, still more preferably 600 to 800 V as measured using a specimen having a thickness of 3 mm according to IEC 60112 before impregnation. Within this range, physical property balance and electrical and physical properties may be excellent.

The thermoplastic resin composition may have a Charpy impact strength of preferably 15 kJ/m² or more, more preferably 17 kJ/m² or more, still more preferably 20 kJ/m² or more, still more preferably 20 to 30 kJ/m² as measured at room temperature using a specimen having a thickness of 4 mm according to ISO 179 after being immersed in a water bath at 70 °C for 7 days, i.e., after moisture absorption. Within this range, the thermoplastic resin composition may be applied to molded articles having excellent physical property balance used in humid environments.

In the present disclosure, room temperature may be a temperature within the range of 20 ± 5 °C.

The thermoplastic resin composition may have a Charpy impact strength of preferably 8 kJ/m² or more, more preferably 9 kJ/m² or more, still more preferably 9 to 15 kJ/m² as measured at room temperature using a specimen having a thickness of 4 mm according to ISO 179 before impregnation. Within this range, physical property balance and mechanical properties may be excellent.

The thermoplastic resin composition may have a tensile strength of preferably 70 MPa or more, more preferably 73 MPa or more, still more preferably 75 MPa or more, still more preferably 75 to 100 MPa as measured at a cross-head speed of 5 mm/min using a specimen having a thickness of 4 mm according to ISO 527-1 and ISO 527-2 after being immersed in a water bath at 70 °C for 7 days, i.e., after moisture absorption. Within this range, the thermoplastic resin composition may be applied to automotive parts and electric and electronic parts having excellent physical property balance used in humid environments.

The thermoplastic resin composition may have a tensile strength of preferably 130 MPa or more, more preferably 135 MPa or more, still more preferably 137 MPa or more, still more preferably 137 to 150 MPa as measured at a cross-head speed 5 mm/min using a specimen having a thickness of 4 mm according to ISO 527-1 and ISO 527-2 before impregnation. Within this range, the thermoplastic resin composition may be applied to automotive parts and electric and electronic parts having excellent physical property balance and mechanical properties.

The thermoplastic resin composition may have a tensile elongation of preferably 7.5 % or less, more preferably 7 % or less, still more preferably 6.7 % or less, still more preferably 3 to 6.7 % as measured at a cross-head speed of 5 mm/min using a specimen having a thickness of 4 mm according to ISO 527-1 and ISO 527-2 after being immersed in a water bath at 70 °C for 7 days, i.e., after moisture absorption. Within this range, the thermoplastic resin composition may be applied to automotive parts and electric and electronic parts having excellent mechanical properties and physical property balance used in humid environments.

The thermoplastic resin composition may have a tensile elongation of preferably 1.5 % or more, more preferably 1.8 % or more, still more preferably 1.8 to 2.4 % as measured at a cross-head speed 5 mm/min using a specimen having a thickness of 4 mm according to ISO 527-1 and ISO 527-2 before impregnation. Within this range, physical property balance and mechanical properties may be excellent.

The thermoplastic resin composition may have a heat deflection temperature of preferably 205 °C or higher, more preferably 208 °C or higher, still more preferably 208 to 220 °C as measured under a load of 1.80 MPa using a specimen having a thickness of 4 mm in the plane direction (flatwise) according to ISO 75-1 or ISO 75-2 before impregnation. Within this range, physical property balance and heat resistance may be excellent.

The thermoplastic resin composition may have a glow wire flammability index (GWFI) of preferably 960 °C or higher as measured using a specimen having a thickness of 1.5 mm according to IEC 60695-2-12 before impregnation. In this case, physical property balance and flame retardancy may be excellent.

In the present disclosure, the glow wire flammability index (GWFI) is a flame retardant standard additionally required in addition to the flame retardant standard based on the UL 94 standard for engineering plastics used in the electrical and electronic fields. Based on the glow wire flammability index (GWFI), an actual flame retardant behavior may be identified and fire may be prevented in advance. The flame retardant evaluation method based on the UL 94 standard is a method of simulating a flame retardant behavior on the premise that a fire has already occurred using flame as a heat source. On the other hand, in the case of the glow wire flammability index (GWFI) according to the standards of the International Electrotechnical Commission (IEC), glow wire serves as a heat source that may cause a fire, and a behavior corresponding to the glow wire is identified. That is, the glow wire flammability index (GWFI) is related to an advanced flame retardant test considering safety in case of fire.

Specifically, when a glow wire flammability index is measured, glow wire is brought into contact with a specimen for 30 seconds, and then the glow wire is withdrawn from the specimen. Then, the maximum temperature at which the flame is extinguished within 30 seconds is measured.

The thermoplastic resin composition may have a flame retardancy of grade V-0 or higher as measured using a specimen having a thickness of 0.8 mm according to UL 94 after being immersed in a water bath at 70 °C for 7 days. Within this range, the thermoplastic resin composition may be applied to molded articles having excellent physical property balance used in humid environments.

The thermoplastic resin composition may have a flame retardancy of grade V-0 or higher as measured using a specimen having a thickness of 0.8 mm according to UL 94 before impregnation. In this case, physical property balance and flame retardancy may be excellent.

### Method of preparing thermoplastic resin composition

A method of preparing the thermoplastic resin composition of the present invention includes a step of kneading and extruding 35 to 65 % by weight of a polyamide resin (A), 18 to 40 % by weight of glass fiber (B), 10 to 30 % by weight of a composite flame retardant (C), 0.06 to 0.4 % by weight of a phosphite-based thermal stabilizer (D), and 0.1 to 0.7 % by weight of a copper-based composite thermal stabilizer (E) at 220 to 280 °C and 100 to 400 rpm to obtain pellets. In this case, high flame retardancy may be implemented by including the non-halogen phosphorus-based flame retardant, and mechanical and electrical properties may be excellent even after moisture absorption.

For example, the kneading and extrusion may be performed using a single-screw extruder, a twin-screw extruder, or a Banbury mixer, preferably a twin-screw extruder. In this case, due to uniform dispersion of the composition, compatibility may be excellent.

For example, the kneading and extrusion may be performed at a barrel temperature of 220 to 280 °C, preferably 240 to 260 °C. In this case, throughput per unit time may be appropriate, and melt kneading may be sufficiently performed, thereby preventing thermal decomposition of resin components.

For example, the kneading and extrusion may be performed at a screw rotation rate of 100 to 400 rpm, preferably 200 to 400 rpm, more preferably 250 to 350 rpm. In this case, due to appropriate throughput per unit time, process efficiency may be excellent, and over-cutting of glass fiber may be suppressed.

The method of preparing the thermoplastic resin composition shares all the technical characteristics of the above-described thermoplastic resin composition. Accordingly, repeated description thereof will be omitted.

### Molded article

A molded article of the present invention includes the thermoplastic resin composition of the present invention. In this case, high flame retardancy may be implemented by including the non-halogen phosphorus-based flame retardant, and mechanical and electrical properties may be excellent even after moisture absorption.

The molded article is preferably an automotive part or an electric and electronic part, more preferably a connector, a junction box, a charging gun inlet, or a charging gun outlet.

For example, a method of manufacturing a molded article according to the present invention includes a step of kneading and extruding 35 to 65 % by weight of a polyamide resin (A), 18 to 40 % by weight of glass fiber (B), 10 to 30 % by weight of a composite flame retardant (C), 0.06 to 0.4 % by weight of a phosphite-based thermal stabilizer (D); and 0.1 to 0.7 % by weight of a copper-based composite thermal stabilizer (E) at 220 to 280 °C and 100 to 400 rpm to obtain pellets; and a step of injecting the obtained pellets using an injection machine. In this case, physical property balance and injection processability may be excellent.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

Materials used in Examples and Comparative Examples below are as follows.
*(A) Polyamide resin: Polyamide 6 (Relative viscosity: 2.3)
*(B) Glass fiber: Chopped glass fiber (Average diameter: 9 to 13 pm, average length: 3 mm) surface-treated with amino silane
*(C) Composite flame retardant: A composite flame retardant obtained by mixing aluminum diethylphosphinate (OP1230, Clariant Co.) and melamine polyphosphate (Melapur 200-70, BASF Co.) in a weight ratio of 75:25
*(D) Phosphite-based thermal stabilizer: Triphenyl phosphite (TPP, phosphorus: 9 wt%)
*(E) Copper-based composite thermal stabilizer: A blend of CuI and KI (CuI: Copper Iodide, KI: Potassium Iodide, copper content: 100 ppm, Crystran Co.)
*(F-1) Nucleating agent: Sodium phosphate (P22, Bruggemann Co.)
*(F-2) Nucleating agent: Talc (KC-3000, KOCH Co.)
*(G) Lubricant: Montan wax (OP-Wax, Clariant Co.)
*(H) Antioxidant: A blend (Irganox B225, BASF Co.) obtained by mixing N,N'-hexane-1,6-diylbis(3-(3,5-di-tert-butyl-4-hydroxyphenylpropionamide)) as a phenolic antioxidant and tris(2,4-di-t-butylphenyl)phosphite as a phosphite-based antioxidant in a weight ratio of 1:1

### Examples 1 to 12 and Comparative Examples 1 to 8

According to the contents shown in Tables 1 to 3 below, the polyamide resin (A), the glass fiber (B), the composite flame retardant (C), the phosphite-based thermal stabilizer (D), the copper-based composite thermal stabilizer (E), the nucleating agent (F), the lubricant (G), and the antioxidant (H) were fed into a Henschel mixer and mixed uniformly. Then, the mixture was extruded at an extrusion temperature of 240 to 260 °C and a screw rotation speed of 300 rpm using a twin-screw extruder ( 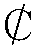 = 40 mm, L/D = 42) to obtain a thermoplastic resin composition in pellet form.

After drying the prepared resin composition in pellet form in a hot air dryer at 120 °C for more than 2 hours, the resin composition was injection-molded at an injection temperature of 260 °C and a mold temperature of 60 °C using an injection machine (80 ton, Engel Co.) to obtain a specimen. The specimen was left in a constant temperature and humidity room (23°C) for more than 24 hours, and the physical properties thereof were measured. The results are shown in Tables 1 to 3.

### [Test Examples]

The properties of specimens prepared in Examples 1 to 12 and Comparative Examples 1 to 8 were measured according to the following methods, and the results are shown in Tables 1 to 3 below.

### Measurement methods

* Tensile strength (MPa): Tensile strength was measured at a cross-head speed of 5 mm/min using a specimen having a thickness of 4 mm according to ISO 527-1 and ISO 527-2.
* Tensile strength (MPa) after moisture absorption: Tensile strength after moisture absorption was measured at a cross-head speed of 5 mm/min using a specimen having a thickness of 4 mm according to ISO 527-1 and ISO 527-2 after being immersed in a water bath at 70 °C for 7 days.
* Tensile elongation (%): Tensile elongation was measured at a cross-head speed of 5 mm/min using a specimen having a thickness of 4 mm according to ISO 527.
* Tensile elongation (%) after moisture absorption: Tensile elongation after moisture absorption was measured at a cross-head speed of 5 mm/min using a specimen having a thickness of 4 mm according to ISO 527-1 and ISO 527-2 after being immersed in a water bath at 70 °C for 7 days.
* Heat deflection temperature (HDT, °C): Heat deflection temperature was measured under a load of 1.80 MPa using a specimen having a thickness of 4 mm in the plane direction (flatwise) according to ISO 75-1 or ISO 75-2.
* Charpy impact strength (kJ/m²): Charpy impact strength was measured at room temperature using a specimen having a thickness of 4 mm according to ISO 179.
* Charpy impact strength (kJ/m²) after moisture absorption: Charpy impact strength after moisture absorption was measured at room temperature using a specimen having a thickness of 4 mm according to ISO 179 after being immersed in a water bath at 70 °C for 7 days.
* Comparative tracking index (CTI): Comparative tracking index was measured using a specimen having a thickness of 3 mm according to IEC 60112. Here, the unit of the comparative tracking index is V (volt).
* Comparative tracking index (CTI) after moisture absorption: Comparative tracking index after moisture absorption was measured using a specimen having a thickness of 3 mm according to IEC 60112 after being immersed in a water bath at 70 °C for 7 days.
* Flame retardancy (UL 94): In accordance with UL 94, a specimen having a thickness of 0.8 mm was placed vertically and ignited with a burner. Then, the time at which the fire on the specimen extinguished by itself was measured. Depending on the time, flame retardancy was classified into grades V-2, V-1, and V-0. Here, the grade V-0 corresponds to the highest flame retardancy grade.
* Flame retardancy (UL 94) after moisture absorption: Flame retardancy after moisture absorption was measured using a specimen having a thickness of 0.8 mm according to UL 94 after being immersed in a water bath at 70 °C for 7 days.
* Glow wire flammability index (GWFI): In accordance with IEC 60695-2-12, glow wire was brought into contact with a specimen having a thickness of 1.5 mm for 30 seconds, and then the glow wire was withdrawn from the specimen. Then, the maximum temperature at which the flame was extinguished within 30 seconds was measured.
* Surface appearance: It was visually observed whether glass fiber floating occurred on the surface of an injection-molded article having a size of 125 mm × 13 mm × 1 mm, and the degree of occurrence of glass fiber floating was evaluated as follows.
o: No glass fiber floating and excellent surface appearance
Δ: Glass fiber floating is observed intermittently, and normal surface appearance
X: Glass fiber floating obviously occurs, and poor surface appearance

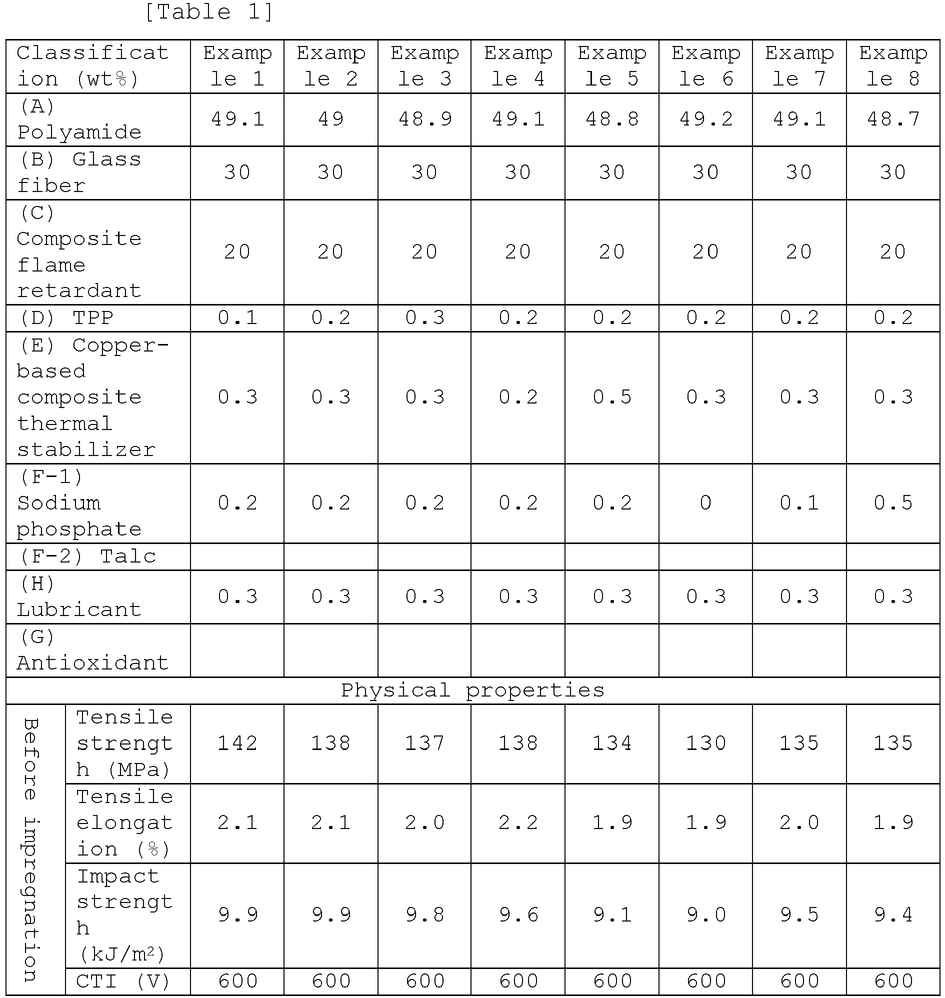

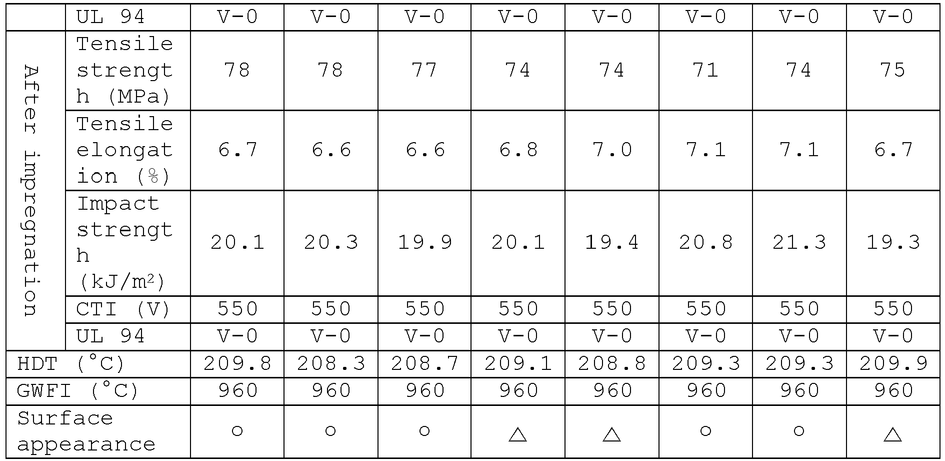

**[Table 2]**

| Classification (wt%) | | Example 9 | Example 10 | Example 11 | Example 12 |
|---|---|---|---|---|---|
| (A) Polyamide | | 49.3 | 49.1 | 49.19 | 48.4 |
| (B) Glass fiber | | 30 | 30 | 30 | 30 |
| (C) Composite flame retardant | | 20 | 20 | 20 | 20 |
| (D) TPP | | 0.1 | 0.1 | 0.2 | 0.2 |
| (E) Copper-based composite thermal stabilizer | | 0.3 | 0.3 | 0.3 | 0.3 |
| (F-1) Sodium phosphate | | | | 0.01 | 0.8 |
| (F-2) Talc | | | 0.2 | | |
| (G) Lubricant | | 0.3 | 0.3 | 0.3 | 0.3 |
| (H) Antioxidant | | | | | |

| Physical properties | | | | | |
|---|---|---|---|---|---|
| Before impregnation | Tensile strength (MPa) | 135 | 141 | 131 | 132 |
| | Tensile elongation (%) | 2 | 1.8 | 1.9 | 1.8 |
| | Impact strength (kJ/m²) | 9.5 | 9.8 | 9.3 | 9.4 |
| | CTI (V) | 600 | 600 | 600 | 575 |
| | UL 94 | V-0 | V-0 | V-0 | V-0 |
| After impregnation | Tensile strength (MPa) | 70.2 | 77 | 71.3 | 72.4 |
| | Tensile elongatio n (%) | 7.3 | 6.2 | 7.4 | 7.3 |
| | Impact strength (kJ/m²) | 19.1 | 20.7 | 19.8 | 19.7 |
| | CTI (V) | 550 | 550 | 550 | 550 |
| | UL 94 | V-0 | V-0 | V-0 | V-0 |
| HDT (°C) | | 209.3 | 209.4 | 209.1 | 209.4 |
| GWFI (°C) | | 960 | 960 | 960 | 960 |
| Surface appearance | | ○ | X | ○ | X |

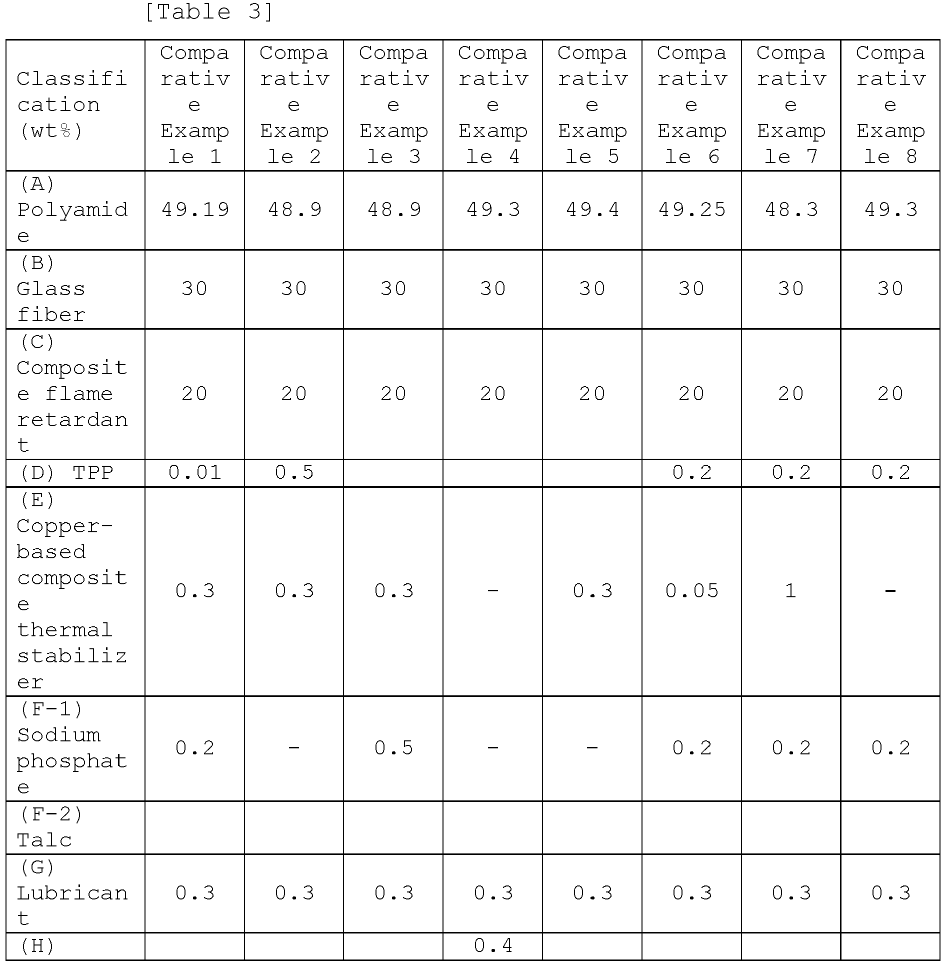

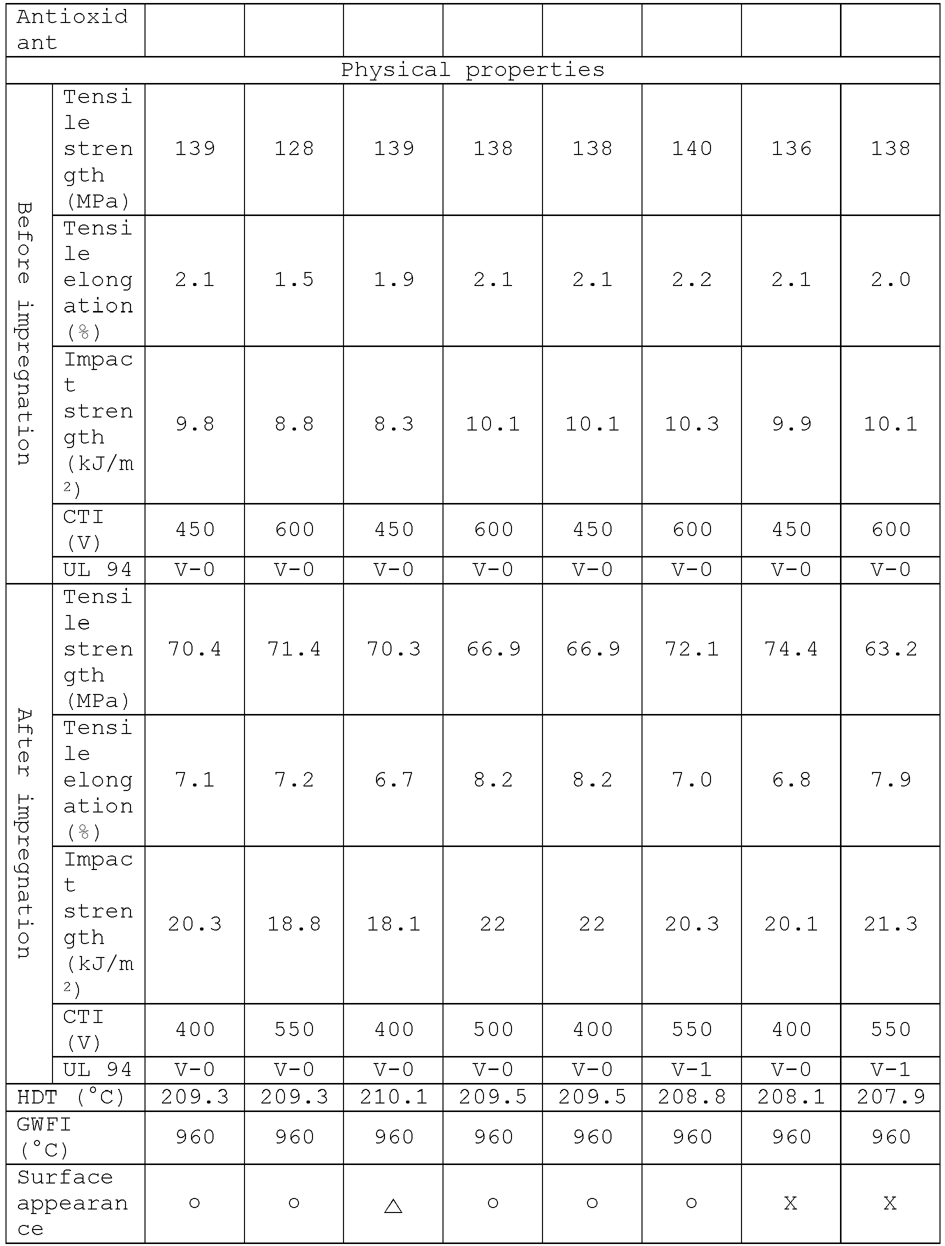

As shown in Tables 1 to 3, compared to Comparative Examples 1 to 8, the thermoplastic resin compositions (Examples 1 to 12) according to the present invention have excellent mechanical properties, such as impact strength, tensile strength, and tensile elongation, even after moisture absorption and exhibit excellent comparative tracking indexes, GWFIs, and flame retardancy.

Specifically, Examples 1 to 5, Examples 7 and 8, and Examples 10 to 12 including sodium phosphate (F-1) or talc (F-2) as a nucleating agent exhibited excellent mechanical and electrical properties before and after impregnation. In particular, Examples 1 to 5 and Examples 7, 8, and 11 including 0.01 to 0.5 % by weight of sodium phosphate (F-1) exhibited excellent surface appearance in addition to excellent mechanical and electrical properties. In addition, in the case of Example 10 including talc (F-2) and Example 12 including 0.8 % by weight of sodium phosphate (F-1), mechanical properties were excellent, but glass fiber floating was observed.

Specifically, in the case of Comparative Example 1 including a small amount of TPP (D), electrical characteristics were poor before and after impregnation. In the case of Comparative Example 2 including an excess of TPP (D), tensile strength was less than 130 MPa before impregnation, indicating that Comparative Example 1 do not satisfy tensile strength required for automotive parts and electric and electronic parts.

In addition, in the case of Comparative Examples 3 and 5 including only the copper-based composite thermal stabilizer (E) without TPP (D), electrical characteristics were poor before and after impregnation. In the case of Comparative Example 4 including neither the copper-based composite thermal stabilizer (E) and TPP (D), tensile strength was reduced and electrical characteristics was poor after impregnation.

In addition, in the case of Comparative Example 6 including a small amount of the copper-based composite thermal stabilizer (E), flame retardancy was reduced after impregnation. In the case of Comparative Example 7 including an excess of the copper-based composite thermal stabilizer (E), electrical characteristics were poor before and after impregnation.

In conclusion, in the case of the thermoplastic resin composition of the present invention including the polyamide resin (A), the glass fiber (B), the composite flame retardant (C), the phosphite-based thermal stabilizer (D), and the copper-based composite thermal stabilizer (E) according to the present invention in a predetermined content ratio, by using a non-halogen phosphorus-based flame retardant, high flame retardancy may be realized, and mechanical and electrical properties may be excellent even after moisture absorption.

## Claims

1. A thermoplastic resin composition, comprising:
35 to 65 % by weight of a polyamide resin (A);
18 to 40 % by weight of glass fiber (B);
10 to 30 % by weight of a composite flame retardant (C) ;
0.06 to 0.4 % by weight of a phosphite-based thermal stabilizer (D); and
0.1 to 0.7 % by weight of a copper-based composite thermal stabilizer (E).

2. The thermoplastic resin composition according to claim 1, wherein the thermoplastic resin composition has a comparative tracking index (CTI) of 530 V or more as measured using a specimen having a thickness of 3 mm according to IEC 60112 after being immersed in a water bath at 70 °C for 7 days.

3. The thermoplastic resin composition according to claim 1, wherein the thermoplastic resin composition comprises 0.01 to 0.6 % by weight of a nucleating agent (F).

4. The thermoplastic resin composition according to claim 3, wherein the nucleating agent (F) comprises one or more organic nucleating agents selected from the group consisting of phosphoric acid, phosphorous acid, hypophosphorous acid, and salts or esters thereof; one or more inorganic nucleating agents selected from the group consisting of talc, mica, wollastonite, silica, kaolin, and clay; or a mixture thereof.

5. The thermoplastic resin composition according to claim 1, wherein the polyamide resin (A) comprises one or more selected from the group consisting of a polymer of a diamine having 2 to 30 carbon atoms and a dicarboxylic acid having 4 to 30 carbon atoms; a lactam polymer; an aminocarboxylic acid polymer; and a copolymer of a lactam and an aminocarboxylic acid.

6. The thermoplastic resin composition according to claim 1, wherein the glass fiber (B) has an average diameter of 3 to 25 µm and an average length of 1 to 10 mm.

7. The thermoplastic resin composition according to claim 1, wherein the composite flame retardant (C) comprises an organic phosphinate metal salt (c-1) and a melamine phosphate-based flame retardant (c-2).

8. The thermoplastic resin composition according to claim 7, wherein the organic phosphinate metal salt (c-1) is a compound represented by Chemical Formula 1 below: 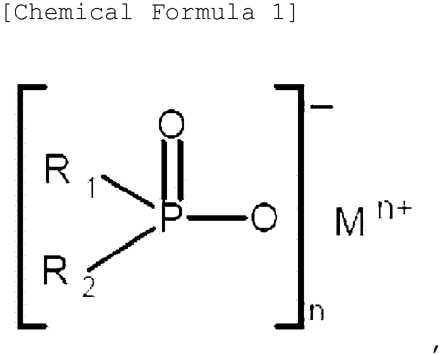 wherein R₁ and R₂ are each an alkyl group or aryl group having 1 to 6 carbon atoms, M comprises one or more selected from the group consisting of Mg, Ca, Al, Sb, Sn, Ge, Ti, Fe, Zr, Ce, Bi, Sr, Mn, Li, Na, K, and a protonated nitrogen base, and n is an integer from 1 to 4.

9. The thermoplastic resin composition according to claim 7, wherein the melamine phosphate-based flame retardant (c-2) comprises one or more selected from the group consisting of melamine pyrophosphate, melamine polyphosphate, melamine pyrophosphate metal salt, and cyclic benzyl phosphate.

10. The thermoplastic resin composition according to claim 1, wherein the phosphite-based thermal stabilizer (D) comprises one or more selected from the group consisting of triphenyl phosphite, diphenylisodecyl phosphite, phenyl diisodecyl phosphite, 4,4'-butylidene-bis(3-methyl-6-t-butylphenyl-di-tridecyl) phosphite, cyclic neopentanetetrayl-bis(octadecyl)phosphite, tris(nonylphenyl)phosphite, tris(dinonyl)phosphite, dioctadecyl-3,5-di-t-butyl-4-hydroxybenzylphosphonate, and di-n-octadecyl-1-(3,5-di-t-butyl-4-hydroxy-phenyl)-ethanephosphonate.

11. The thermoplastic resin composition according to claim 1, wherein the phosphite-based thermal stabilizer (D) contains 8 to 13 % by weight of phosphorus based on a total weight thereof.

12. The thermoplastic resin composition according to claim 1, wherein the copper-based composite thermal stabilizer (E) comprises one or more selected from the group consisting of copper(I) chloride, copper(I) bromide, copper(I) iodide, copper(II) chloride, copper(II) bromide, and copper(II) iodide.

13. The thermoplastic resin composition according to claim 1, wherein the copper-based composite thermal stabilizer (E) comprises an alkali metal halide.

14. A method of preparing a thermoplastic resin composition, comprising kneading and extruding 35 to 65 % by weight of a polyamide resin (A), 18 to 40 % by weight of glass fiber (B), 10 to 30 % by weight of a composite flame retardant (C), 0.06 to 0.4 % by weight of a phosphite-based thermal stabilizer (D), and 0.1 to 0.7 % by weight of a copper-based composite thermal stabilizer (E) at 220 to 280 °C and 100 to 400 rpm to obtain pellets.

15. A molded article, comprising the thermoplastic resin composition according to any one of claims 1 to 13.
